# EUROPÄISCHE PATENTANMELDUNG

(11) **EP 4 796 313 A1**
(43) Veröffentlichungstag der Anmeldung: **26.08.2026**
(21) Anmeldenummer: 26158564.0
(22) Anmeldetag: 13.02.2026
(51) Int. Cl.: B32B 5/02, B32B 5/18, B32B 5/24, B32B 5/26, D06M 23/04

(54) **VERFAHREN ZUR HERSTELLUNG EINES TEXTILEN MATERIALVERBUNDS UND TEXTILER MATERIALVERBUND**

(30) Priorität: 24.02.2025 DE 102025106784
(71) Anmelder: Carl Meiser GmbH & Co. KG, 72461 Albstadt (DE)
(72) Erfinder: Meiser, Jens, 72461 Albstadt (DE)
(74) Vertreter: Kohler Schmid Möbus Patentanwälte

(57) **Zusammenfassung**

Die Erfindung betrifft ein Verfahren zur Herstellung eines textilen Materialverbunds (10) mit den Verfahrensschritten:
a. Bereitstellen eines textilen Obermaterials (12),
b. Applizieren von voneinander beabstandeten Blähgraphit aufweisenden Strukturen (16, 26, 36, 46, 56, 66, 76, 86) auf einer Seite (14) des Obermaterials (12),
c.Aufbringen einer textilen Deckschicht (20).

## Beschreibung

Die Erfindung betrifft ein Verfahren zur Herstellung eines textilen Materialverbunds und einen textilen Materialverbund.

Insbesondere betrifft die Erfindung einen textilen Materialverbund mit einer Flammschutzfunktion. Flammgeschützte Textilmaterialien sind für eine Vielzahl von Anwendungen unerlässlich, insbesondere in Bereichen, in denen Personen erhöhten Risiken durch Feuer und Hitze ausgesetzt sind. Bekannte Lösungen umfassen die Verwendung inhärent flammhemmender Fasern oder die Beschichtung von Textilien mit flammhemmenden Substanzen. Beispielsweise beschreibt die EP 2 205 110 B1 einen Artikel umfassend einen flammwidrigen Textilverbundstoff, umfassend
a. einen schmelzbaren äußeren Textilstoff, umfassend ein schmelzbares Material, wobei der schmelzbare äußere Textilstoff eine Innenfläche und eine Außenfläche aufweist;
b. ein wärmereaktives Material, das ein Polymerharz und einen expandierbaren Graphit umfasst, der sich auf das Erhitzen auf 280°C hin um mindestens 900 mm expandiert, wobei das wärmereaktive Material auf die Innenfläche des schmelzbaren Textilstoffs aufgebracht ist;
c. eine wärmestabile konvektive Barriere, an dem wärmereaktiven Material anliegend, wobei der Artikel eine Aufbrechzeit aufweist, die mindestens 30 Sekunden länger ist, als bei einem im Wesentlichen ähnlichen Artikel ohne das wärmereaktive Material zwischen dem schmelzbaren äußeren Textilstoff und der wärmestabilen konvektiven Barriere und wobei die Außenfläche des schmelzbaren äußeren Textilstoffs der Flamme ausgesetzt werden soll.

Dabei ist das wärmereaktive Material vollflächig auf den äußeren Textilstoff aufgebracht. Dadurch wird der Textilverbundstoff relativ unflexibel, sodass bei der Verwendung des Textilverbundstoffes in Schutzbekleidung eine Person, welche die Schutzbekleidung trägt, in ihrer Bewegungsfreiheit eingeengt ist. Außerdem ist der Textilverbundstoff nicht wasserdampfdurchlässig, sodass auch aus diesem Grund der Tragekomfort von Schutzbekleidung, welche aus einem solchen Textilverbundstoff hergestellt ist, beeinträchtigt ist.

Aufgabe der vorliegenden Erfindung ist es, ein Verfahren zur Herstellung eines textilen Materialverbunds bereitzustellen, mit dem ein Materialverbund hergestellt werden kann, der eine große Flexibilität aufweist und wasserdampfdurchlässig ist.

Gelöst wird diese Aufgabe erfindungsgemäß durch ein Verfahren zur Herstellung eines textilen Materialverbunds mit den Verfahrensschritten:
a. Bereitstellen eines textilen Obermaterials;
b. Applizieren von voneinander beanstandeten Blähgraphit aufweisenden Strukturen auf einer Seite des Obermaterials;
c. Aufbringen einer textilen Deckschicht.

Dadurch, dass die Blähgraphit aufweisenden Strukturen voneinander beabstandet sind, weist der textile Materialverbund zum einen eine große Flexibilität auf. Zum anderen wird dadurch eine Atmungsaktivität des textilen Materialverbunds geschaffen, da Wasserdampf durch die Zwischenräume zwischen den Blähgraphit aufweisenden Strukturen entweichen kann. Die Schutzwirkung gegen Flammen und Hitze, die sich im Wesentlichen aus den Blähgraphit aufweisenden Strukturen ergibt, wird durch die Beabstandung der Blähgraphit aufweisenden Strukturen (im Folgenden auch Blähgraphitstrukturen) nur minimal beeinträchtigt. Dadurch, dass die Blähgraphit aufweisenden Strukturen unmittelbar, direkt auf einer Seite des Obermaterials angebracht werden, sind diese in der Nähe einer potenziellen Hitzequelle. Insbesondere kann das Blähgraphit schneller reagieren, als bei einer Einlagerung des Blähgraphits in eine Schaumschicht. Durch die Nähe der Blähgraphitpartikel zum Obermaterial wird eine direkte Wärmeübertragung auf die Blähgraphitpartikel gewährleistet, wodurch diese bei einer bestimmten Temperatur unverzüglich expandieren und eine effektive, isolierende Schicht bilden.

Wenn Blähgraphitpartikel wie im Stand der Technik in einer Schaumschicht auf das textile Obermaterial aufgebracht werden, sind sie durch Bereiche der Schaumschicht von dem textilen Obermaterial beabstandet, sodass eine Reaktion aufgrund von Hitze erst später eintritt. Es ergibt sich somit erfindungsgemäß eine gezieltere und effizientere Nutzung des Blähgraphits, wodurch eine maximale Schutzwirkung bei minimalem Materialeinsatz erzielt wird. Die Blähgraphitstrukturen können polyurethanfrei sein. Die Blähgraphitstrukturen bilden eine partielle, strukturierte Beschichtung des Obermaterials. Die Blähgraphitstrukturen können als geometrische Strukturen oder zufällig gelegte Punktstruktur ausgebildet sein. Insbesondere können die Blähgraphitstrukturen nicht in einer Schaummischung und nicht in einer Harzmischung vorliegen.

Als textiles Obermaterial kann jedes geeignete Gewebe, Gewirke oder Vliesmaterial verwendet werden. Beispielsweise kann das textile Obermaterial Baumwolle, synthetische Fasern oder Mischungen davon aufweisen. Das textile Obermaterial kann nicht schmelzend sein.

Zwischen den Schritten b. und c. kann eine vorzugsweise graphitfreie Schaumschicht vollflächig auf die Seite des Obermaterials zur Abdeckung der Blähgraphit aufweisenden Strukturen aufgetragen werden. Es werden also zunächst die Blähgraphit aufweisenden Strukturen auf einer Seite des Obermaterials aufgebracht und anschließend wird die Schaumschicht auf die Blähgraphit aufweisenden Strukturen aufgebracht. Durch die vollflächige Schaumschicht wird eine zuverlässige Fixierung der Blähgraphitstrukturen erreicht, was die Waschbeständigkeit des textilen Materialverbunds verbessert. Außerdem erlaubt die Schaumschicht das Laminieren der textilen Deckschicht auf der Schaumschicht. Die Schaumschicht kann Bindemittel und Stabilisatoren aufweisen. Die Schaumschicht kann durch Rühren einer Schaummasse aus Bindemittel und Stabilisatoren erzeugt werden. Die Schaumschicht selbst ist vorzugsweise frei von Blähgraphitpartikeln. Durch die Schaumschicht wird ein "Lock-in-Effekt" erzielt, ohne die thermische Sensitivität des Graphits durch Vermischung zu mindern.

Das Aufbringen der Schaumschicht erfolgt vorzugsweise über ein Streichsystem, welches eine gleichmäßige Verteilung und Einbettung der Blähgraphitstrukturen gewährleistet. Die Schaumschicht kann als Einbettschicht und Schutzschicht für die Blähgraphitstrukturen gegen Waschen und mechanische Beanspruchung dienen. Alternativ oder zusätzlich kann sie als Laminationsschicht dienen. Weiterhin kann sie der zusätzlichen Funktion der Atmungsaktivität und/oder Verklebung der Schichten dienen.

Die Schaummasse, aus der die Schaumschicht hergestellt wird, kann einen Vernetzer enthalten, um die Stabilität und Waschbeständigkeit der Beschichtung zu erhöhen. Die textile Deckschicht kann online auf die Schaumschicht laminiert werden, wodurch ein fester Materialverbund entsteht.

Gemäß einer bevorzugten Verfahrensvariante werden die Blähgraphit aufweisenden Strukturen mittels einer Schablone auf das Obermaterial aufgebracht. Dadurch können besonders einfach voneinander beabstandete Strukturen erzeugt werden. Außerdem können Muster von Blähgraphitstrukturen einfach aufgebracht werden.

Gemäß einer Verfahrensvariante kann vorgesehen sein, dass zur Erzeugung der Blähgraphit aufweisenden Strukturen Blähgraphitpartikel auf die Oberschicht aufgestreut werden. Die Blähgraphitpartikel können als Blähgraphitblättchen vorliegen. Vor dem Aufstreuen oder anderweitigem Aufbringen der Blähgraphit aufweisenden Strukturen kann der Salzgehalt des insbesondere plättchenförmigen Blähgraphits durch Nachwaschen ausgewaschen werden. Insbesondere kann der Salzgehalt auf einen Anteil von unter 1 % gesenkt werden.

Gemäß einer alternativen Verfahrensvariante kann vorgesehen sein, dass zur Erzeugung der Blähgraphit aufweisenden Strukturen ein Wasserslurry oder eine ungeschäumte Paste, die jeweils Blähgraphit aufweisen, auf die Seite des Obermaterials aufgedruckt wird. Beispielsweise kann das Wasserslurry oder die ungeschäumte Paste im Rotationsdruckverfahren aufgebracht werden, wobei die Strukturierung wiederum durch eine Schablone erfolgt. Das Wasserslurry kann bindemittelfrei ausgebildet sein. Wenn der Blähgraphit über eine Paste aufgebracht wird, kann die Paste ein Bindersystem und ein Entschäumungsmittel aufweisen. Die Paste kann auf Polyurethanbasis hergestellt sein. Alternativ kann die Paste auf Acrylatbasis oder Silikonbasis hergestellt sein. Die optionale Schaumschicht kann unmittelbar nach dem Aufbringen der Blähgraphit aufweisenden Strukturen auf diese aufgebracht werden. Alternativ kann eine gewisse Zeit abgewartet werden, sodass die Blähgraphit aufweisenden Strukturen aushärten können. Die Blähgraphitstrukturen können (eine geringe Menge) Bindemittel aufweisen, um die nachgelagerte Schaumschicht oder Deckschicht noch besser anzubinden.

Die Schaumschicht kann in einer Materialdicke im Bereich 0,55 mm bis 3 mm aufgetragen werden. Es versteht sich, dass die Dicke der Schaumschicht so gewählt wird, dass die Blähgraphit aufweisenden Strukturen vollständig durch die Schaumschicht abgedeckt sind, sodass diese über die Schaumschicht an dem textilen Obermaterial fixiert werden. Die Dicke der Schaumschicht kann demnach in Abhängigkeit der Dicke bzw. Höhe der Blähgraphit aufweisenden Strukturen gewählt werden.

Die Schaumschicht kann nach dem Auftragen, insbesondere nach einer Trockenphase, verpresst werden. Dadurch wird die Dicke der Schaumschicht reduziert. Die Fixierung der Blähgraphit aufweisenden Strukturen am Obermaterial wird dadurch verbessert.

Die textile Deckschicht kann auf die Schaumschicht laminiert werden. Dadurch entsteht ein stabiler Materialverbund. Die Deckschicht kann die Kontaktschicht zu einem Benutzer darstellen, wenn aus dem hergestellten Materialverbund ein Schutzbekleidungsstück erzeugt wird.

In den Rahmen der Erfindung fällt außerdem ein textiler Materialverbund mit einer textilen Oberschicht, auf einer Seite der Oberschicht angeordneten Blähgraphit aufweisenden voneinander beabstandeten Strukturen und einer auf textilen Deckschicht. Der textile Materialverbund kann insbesondere in dem erfindungsgemäßen Verfahren hergestellt sein. Zumindest einige der Blähgraphit aufweisenden Strukturen sind beabstandet. Es ist nicht ausgeschlossen, dass sich manche Blähgraphit aufweisenden Strukturen berühren.

Der erfindungsgemäße textile Materialverbund zeichnet sich durch hohe Flexibilität und Atmungsaktivität aus. Durch die partielle, strukturierte Beschichtung mit Blähgraphitpartikeln wird die Flexibilität und Atmungsaktivität des Materialverbunds im Vergleich zu vollflächigen Beschichtungen verbessert. Der textile Materialverbund weist eine effiziente Flammschutzwirkung auf. Die partielle Anordnung der Blähgraphitstrukturen ermöglicht eine schnelle und effiziente Reaktion auf Hitzeeinwirkung, wodurch eine hohe Schutzwirkung erzielt wird. Die Blähgraphitpartikel sind direkt an der äußersten Schicht angebracht, welche zuerst mit Hitze beaufschlagt wird, sodass bei Hitze eine schnelle Expansion erfolgt. Das erfindungsgemäße Verfahren ermöglicht eine schnelle und effiziente Herstellung des Materialverbunds in einem kontinuierlichen Prozess (Onlineverfahren).

Gemäß einer Ausführungsform ist eine insbesondere kontinuierliche die Blähgraphit aufweisenden Strukturen abdeckenden Schaumschicht vorgesehen. Unter einer kontinuierlichen Schaumschicht ist eine Schaumschicht zu verstehen, die unterbrechungsfrei ausgebildet ist. Die Schaumschicht kann mehrere Funktionen gleichzeitig übernehmen, nämlich die Einbettung der Blähgraphitpartikel bzw. der Blähgraphitstrukturen, die Funktion einer Schutzschicht, einer Laminationsschicht und die Gewährleistung der Atmungsaktivität. Durch die Abdeckung der Blähgraphitstrukturen durch eine Schaumschicht wird eine verbesserte Fixierung und ein Schutz der Blähgraphitstrukturen erreicht. Insbesondere besteht ein Schutz gegen mechanische Beanspruchung und Waschen.

Die Blähgraphit aufweisenden Strukturen können einen Abstand im Bereich von 0,1 mm bis 1,1 mm zueinander aufweisen. Durch den geringen Abstand wird die Flexibilität und Atmungsaktivität des textilen Materialverbunds sichergestellt.

Die Blähgraphit aufweisenden Strukturen können eine Höhe im Bereich von 0,05 mm bis 0,55 mm aufweisen. Diese geringe Höhe ist ausreichend für einen hinreichenden Flammschutz.

Die Blähgraphit aufweisenden Strukturen können einen Durchmesser oder eine maximale laterale Ausdehnung, d.h. Ausdehnung parallel zur Oberfläche des Obermaterials, im Bereich von 0,3 mm bis 15 mm aufweisen. Man kann auch sagen, dass die Blähgraphit aufweisenden Strukturen eine Größe im Bereich von 0,3 mm bis 15 mm aufweisen.

Die Blähgraphit aufweisenden Strukturen können symmetrisch ausgebildet sein, insbesondere kreisförmig oder mehreckig, insbesondere mit einer geraden Anzahl von Ecken, vorzugsweise sechseckig, ausgebildet sein. Mit symmetrisch ausgebildeten Strukturen lässt sich besonders einfach ein konstanter bzw. gleichmäßiger Abstand zwischen den einzelnen Blähgraphit aufweisenden Strukturen realisieren. Die Blähgraphit aufweisenden Strukturen können punktsymmetrisch sein oder bzgl. einer Mittenebene symmetrisch sein.

Die Blähgraphit aufweisenden Strukturen können in einem wiederkehrenden Muster angeordnet sein. Über ein solches wiederkehrendes Muster lassen sich die Materialeigenschaften besonders gut einstellen.

Der Materialverbund kann lokale Häufungen und/oder Gruppen von Blähgraphit aufweisenden Strukturen aufweisen. Dies bedeutet, dass Bereiche vorgesehen sein können, in denen pro Flächeneinheit mehr Blähgraphit aufweisende Strukturen vorhanden sind als in anderen Bereichen. In diesen Bereichen lokaler Häufungen können die Blähgraphit aufweisenden Strukturen auch einen geringeren Abstand zueinander aufweisen als in anderen Bereichen.

Weiterhin können Gruppen von Blähgraphitstrukturen von anderen Gruppen einen größeren Abstand aufweisen als die Blähgraphitstrukturen untereinander innerhalb der Gruppe.

Die Blähgraphitstrukturen können eine einheitliche gleiche Größe aufweisen oder unterschiedliche Größen. Der Abstand zwischen den Blähgraphitstrukturen kann gleich sein oder variieren.

In den Rahmen der Erfindung fällt außerdem ein Schutzbekleidungsstück mit einem erfindungsgemäßen textilen Materialverbund.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: eine stark schematisierte Darstellung eines erfindungsgemäßen Materialverbunds;
- Fig. 2a - e: Beispiele von unterschiedlich ausgebildeten und angeordneten Blähgraphit aufweisender Strukturen.

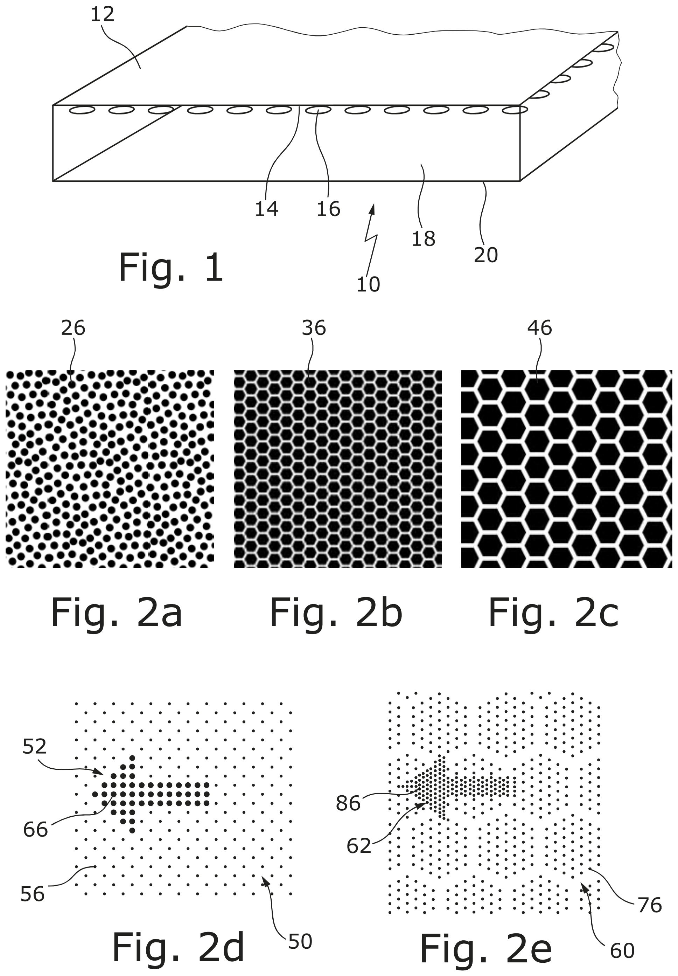

Die Figur 1 zeigt einen textilen Materialverbund 10 mit einer textilen Oberschicht 12, die auf einer Seite 14, insbesondere auf ihrer Rückseite, mehrere voneinander beabstandete Blähgraphit aufweisende Strukturen 16 aufweist. Auf den Blähgraphit aufweisenden Strukturen 16 ist eine optionale Schaumschicht 18 angeordnet, die wiederum von einer textilen Deckschicht 20 abgedeckt ist. Bei Verwendung des Materialverbunds in einem Kleidungsstück ist die Deckschicht dem Körper einer das Kleidungsstück tragenden Person zugewandt und die Oberschicht entsprechend der Person abgewandt und somit einer potentiellen Hitzequelle zugewandt.

Die Schaumschicht 18 ist vorzugsweise vollflächig aufgebracht, sodass die Blähgraphit aufweisenden Strukturen 16 in die Schaumschicht 18 eingebettet sind und die Schaumschicht 18 in den Bereichen, in denen die Blähgraphit aufweisenden Strukturen 16 voneinander beanstandet sind, bis zur Rückseite (Seite 14) der Oberschicht 12 reicht. Somit werden die Blähgraphit aufweisenden Strukturen 16 durch die Schaumschicht 18 an der Oberschicht 12 fixiert. Die Blähgraphit aufweisenden Strukturen 16 sind in unmittelbarem Kontakt mit der Oberschicht 12 angeordnet. Wenn die Oberseite der Oberschicht 12 in die Nähe einer Hitzequelle gelangt, können die Blähgraphitpartikel der Strukturen 16 besonders schnell reagieren.

Die Figur 2a zeigt eine erste Anordnung und Ausgestaltung von Blähgraphit aufweisenden Strukturen 26. Die Blähgraphit aufweisenden Strukturen 26 sind kreisrund ausgebildet. Der Abstand zu benachbarten Blähgraphit aufweisenden Partikeln 26 ist variabel, d. h. nicht konstant.

Die Figur 2b zeigt eine alternative Ausgestaltung und Anordnung von Blähgraphit aufweisenden Strukturen 36. Die Blähgraphit aufweisenden Strukturen 36 sind sechseckig ausgebildet. Sie sind in einem gleichmäßigen Muster angeordnet. Der Abstand einer Blähgraphit aufweisenden Struktur 36 zu benachbarten Blähgraphit aufweisenden Strukturen 36 ist konstant. Während die Blähgraphit aufweisenden Strukturen 26 der Figur 2a punktsymmetrisch ausgebildet sind, sind die Blähgraphit aufweisenden Strukturen 36 der Figur 2b bzgl. einer Mittenebene symmetrisch ausgebildet.

Die Figur 2c unterschiedet sich von der Figur 2b dadurch, dass die Blähgraphit aufweisenden Strukturen 46 größer, d. h. mit einer größeren lateralen Erstreckung, ausgebildet sind. Auch der Abstand zwischen den Blähgraphit aufweisenden Strukturen 46 ist größer als in der Figur 2b.

Die Figur 2d zeigt, dass in einem ersten Bereich 50 Blähgraphit aufweisende Strukturen 56 gleichmäßig, d. h. mit konstantem Abstand zueinander angeordnet sind. Weiterhin ist ein zweiter Bereich 52 zu erkennen, der eine Häufung von Strukturen 66, die Blähgraphit aufweisen, aufweist. In diesem zweiten Bereich 52 ist auch der Abstand zwischen Blähgraphit aufweisenden Strukturen 66 geringer, als im ersten Bereich 50. Weiterhin sind die Größen der Blähgraphitstrukturen 56 und 66 unterschiedlich.

Die Figur 2e zeigt ein weiteres Beispiel einer Anordnung von Strukturen, die Blähgraphit aufweisen. Hier sind Bereiche 60 vorgesehen, in denen mehrere voneinander beabstandete Blähgraphit aufweisende Strukturen 76 vorhanden sind. Die Strukturen 76 weisen innerhalb des Bereichs 60 zueinander den gleichen Abstand auf und weisen auch dieselbe Größe auf. Der Bereich 60 weist eine sechseckige Form auf. Somit ist eine Gruppe oder Gruppierung von Strukturen 76 vorhanden. In diesem Fall weist die Gruppierung eine sechseckige Form auf. Es sind mehrere solcher Gruppierungen oder Bereiche 60 vorhanden, wobei der Abstand zu benachbarten Bereichen 60 größer ist als der Abstand zwischen einzelnen Strukturen 76 innerhalb eines Bereichs 60.

Weiterhin ist ein Bereich 62 zu erkennen, in dem Strukturen 86, die Blähgraphit aufweisen, vorgesehen sind. Bei dem Bereich 62 handelt es sich um eine lokale Häufung von Strukturen 86. Auch der Abstand der Strukturen 86 ist geringer, als der Abstand der Strukturen 76 im Bereich 60.

Die Strukturen 60 sind in einem wiederkehrenden Muster angeordnet.

Aus den Figuren 2a bis 2e ergibt sich, dass die Strukturen, die Blähgraphit aufweisen, unterschiedliche Größen und Formen aufweisen können. Die Strukturen, die Blähgraphit aufweisen, können unterschiedliche Abstände zueinander aufweisen. Sie können zu Gruppen zusammengefasst sein, wobei der Abstand zu anderen Gruppen konstant oder variabel sein kann. Es können außerdem Bereiche mit lokalen Häufungen von Strukturen, die Blähgraphit aufweisen, vorgesehen sein. Sowohl die Strukturen, die Blähgraphit aufweisen selbst, als auch die Gruppen von Strukturen, die Blähgraphit aufweisen, können in einem wiederkehrenden Muster angeordnet sein.

## Patentansprüche

1. Verfahren zur Herstellung eines textilen Materialverbunds (10) mit den Verfahrensschritten:
a. Bereitstellen eines textilen Obermaterials (12),
b. Applizieren von voneinander beabstandeten Blähgraphit aufweisenden Strukturen (16, 26, 36, 46, 56, 66, 76, 86) auf einer Seite (14) des Obermaterials (12),
c. Aufbringen einer textilen Deckschicht (20).

2. Verfahren nach Anspruch 1, **dadurch gekennzeichnet, dass** eine Schaumschicht (18) auf die Seite (14) des Obermaterials (12) zur Abdeckung der Blähgraphit aufweisenden Strukturen (16, 26, 36, 46, 56, 66, 76, 86) vollflächig aufgetragen wird.

3. Verfahren nach einem der vorhergehenden Ansprüche, **dadurch gekennzeichnet, dass** die Blähgraphit aufweisenden Strukturen (16, 26, 36, 46, 56, 66, 76, 86) mittels einer Schablone auf das Obermaterial aufgebracht werden.

4. Verfahren nach einem der vorhergehenden Ansprüche, **dadurch gekennzeichnet, dass** zur Erzeugung der Blähgraphit aufweisenden Strukturen (16, 26, 36, 46, 56, 66, 76, 86) Blähgraphitpartikel auf die Oberschicht (12) aufgestreut werden.

5. Verfahren nach einem der vorhergehenden Ansprüche 1 oder 2, **dadurch gekennzeichnet, dass** zur Erzeugung der Blähgraphit aufweisenden Strukturen (16, 26, 36, 46, 56, 66, 76, 86) ein Wasserslurry oder eine ungeschäumte Paste, die jeweils Blähgraphit aufweisen, auf die Oberschicht (12) aufgedruckt wird.

6. Verfahren nach einem der vorhergehenden Ansprüche 2 bis 5, **dadurch gekennzeichnet, dass** die Schaumschicht (18) in einer Materialdicke im Bereich 0,55 mm bis 3 mm aufgetragen wird.

7. Verfahren nach einem der vorhergehenden Ansprüche 2 bis 6, **dadurch gekennzeichnet, dass** die Schaumschicht (18) nach dem Auftragen, insbesondere nach einer Trockenphase, verpresst wird.

8. Verfahren nach einem der vorhergehenden Ansprüche 2 bis 7, **dadurch gekennzeichnet, dass** die textile Deckschicht (20) auf die Schaumschicht (18) laminiert wird.

9. Textiler Materialverbund (10) mit einer textilen Oberschicht (12), auf einer Seite (14) der Oberschicht (12) angeordneten Blähgraphit aufweisenden voneinander beabstandeten Strukturen (16, 26, 36, 46, 56, 66, 76, 86) und einer textilen Deckschicht (20).

10. Textiler Materialverbund nach Anspruch 9, **dadurch gekennzeichnet, dass** eine insbesondere kontinuierliche Schaumschicht (18) die Blähgraphit aufweisenden Strukturen (16, 26, 36, 46, 56, 66, 76, 86) abdeckt.

11. Textiler Materialverbund nach Anspruch 9 oder 10, **dadurch gekennzeichnet, dass** die Blähgraphit aufweisenden Strukturen (16, 26, 36, 46, 56, 66, 76, 86) einen Abstand von 0,1 mm bis 1,1 mm zueinander aufweisen und/oder dass die Blähgraphit aufweisenden Strukturen (16, 26, 36, 46, 56, 66, 76, 86) eine Höhe von 0,05 mm bis 0,55 mm aufweisen und/oder dass die Blähgraphit aufweisenden Strukturen (16, 26, 36, 46, 56, 66, 76, 86) einen Durchmesser oder eine maximale laterale Ausdehnung im Bereich 0,3 mm bis 15 mm aufweisen.

12. Textiler Materialverbund nach einem der vorhergehenden Ansprüche 9 bis 11, **dadurch gekennzeichnet, dass** die Blähgraphit aufweisenden Strukturen (16, 26, 36, 46, 56, 66, 76, 86) symmetrisch ausgebildet sind, insbesondere kreisförmig oder mehreckig, vorzugsweise sechseckig, ausgebildet sind.

13. Textiler Materialverbund nach einem der vorhergehenden Ansprüche 9 bis 12, **dadurch gekennzeichnet, dass** die Blähgraphit aufweisenden Strukturen (16, 26, 36, 46, 56, 66, 76, 86) in einem wiederkehrenden Muster angeordnet sind.

14. Textiler Materialverbund nach einem der vorhergehenden Ansprüche 9 bis 13, **dadurch gekennzeichnet, dass** der Materialverbund (10) lokale Häufungen von Blähgraphit aufweisenden Strukturen (16, 26, 36, 46, 56, 66, 76, 86) aufweist.

15. Schutzbekleidungsstück mit einem textilen Materialverbund nach einem der vorhergehenden Ansprüche 9 bis 14.
